# EUROPEAN PATENT APPLICATION

(11) **EP 3 381 539 A1**
(43) Date of publication of application: **03.10.2018**
(21) Application number: 15909363.2
(22) Date of filing: 09.12.2015
(51) Int. Cl.: B01D 53/62, C10B 27/00

(54) **METHOD FOR REMOVING CARBON DIOXIDE IN ACIDIC GAS AND APPARATUS THEREFOR**

(30) Priority: 27.11.2015 KR 20150167467
(71) Applicant: Posco, Pohang-si, Gyeongsangbuk-do 37859 (KR)
(72) Inventor: CHO, Moon Kyung, Pohang-si Gyeongsangbuk-do 37859 (KR); PARK, Ju-Yong, Pohang-si Gyeongsangbuk-do 37859 (KR); CHOI, Hye Ji, Pohang-si Gyeongsangbuk-do 37859 (KR); KWON, Woo-Taeck, Pohang-si Gyeongsangbuk-do 37859 (KR); CHOI, Han-Young, Pohang-si Gyeongsangbuk-do 37859 (KR)
(74) Representative: Zech, Stefan Markus
(86) International application number: PCT/KR2015/013457
(87) International publication number: WO 2017/090814

(57) **Abstract**

Disclosed herein are a method for removing carbon dioxide in acidic gas and an apparatus therefor.

An exemplary embodiment of the present invention provide a method for removing carbon dioxide in acidic gas, including: purifying coke oven gas to prepare acidic gas; injecting ammonia into the acidic gas and adjusting a molar ratio of carbon dioxide to ammonia in an entire mixed stream to 0.5 or more; indirectly cooling the mixed stream to form a salt; removing the salt in a form of slurry; heating the salt in the removed slurry to decompose the salt into carbon dioxide gas, ammonia gas, and water; and recovering the decomposed ammonia gas.

## Description

### [Technical Field]

The present invention relates to a method for removing carbon dioxide in acidic gas and an apparatus therefor.

### [Background Art]

The present invention relates to a method for removing carbon dioxide in acidic gas and an apparatus therefor.

Acidic gas including carbon dioxide, hydrogen sulfide, and the like, is a gas generated in overall industries such as combustion and desulfurization industries. In this case, generally, contents of carbon dioxide and sulfur gas are in inverse proportion to each other. In the case of combustion gas containing carbon dioxide as a main ingredient, a carbon capture storage (CCS) technology has been actively developed and commercially used, but has the following limitations.

This technology has a limitation in that an amine based compound, a basic solution such as ammonia, a carbonate solution, a membrane, or the like, used to collect carbon dioxide is effectively only under the condition at which a content of sulfur gas is significantly small. The reason is that both carbon dioxide and sulfur gas exhibit an acidic behavior and have similar reactivity to a reactant, and thus, treatment and circulation of the reactant. Further, an economical solution for maintaining/managing and recycling a reactant for collecting carbon dioxide is required, and there is a difficult in that economical efficiency is secured only when the collected carbon dioxide is effectively utilized.

Therefore, the present invention provides a technology for selectively removing carbon dioxide capable of being economically accessible and easily treating exhaust gas.

### [DISCLOSURE]

### [Technical Problem]

The present invention has been made in an effort to provide a method for removing carbon dioxide in acidic gas and an apparatus therefor.

### [Technical Solution]

An exemplary embodiment of the present invention provides a method for removing carbon dioxide in acidic gas including: purifying coke oven gas to prepare acidic gas; injecting ammonia into the acidic gas and adjusting a molar ratio of carbon dioxide to ammonia in an entire mixed stream to 0.5 or more; indirectly cooling the mixed stream to form a salt; removing the salt in a form of slurry; heating the salt in the removed slurry to decompose the salt into carbon dioxide gas, ammonia gas, and water; and recovering the decomposed ammonia gas.

More specifically, in the injecting of the ammonia into the acidic gas to adjust the molar ratio of carbon dioxide to ammonia in the entire mixed stream to 0.5 or more, when the molar ratio of carbon dioxide to ammonia is less than 0.5, ammonia may be injected. Further, the ammonia may be injected in a form of mixed gas of ammonia gas and steam.

The heating of the salt in the removed slurry to decompose the salt into carbon dioxide gas, ammonia gas, and water may be performed using high temperature nitrogen gas and steam, and performed at 70 °Cor more.

In the indirectly cooling of the mixed stream to form the salt, a temperature may be 50 °C or less, more specifically, 20 to 50 °C. Here, the formed salt may include ammonium bicarbonate ((NH₄)₂CO₃) and a reaction represented by Chemical Formula 1 may be included in the indirectly cooling of the mixed stream to form the salt.

[Reaction Formula 1] CO₂ + 2NH₃ + H₂O = (NH₄)₂CO₃

Hydrogen sulfide gas in the coke oven gas may be purified by the purifying of the coke oven gas to prepare the acidic gas.

In the recovering of the decomposed ammonia gas, the ammonia gas may be recovered in a form of aqueous ammonia due to water.

Then, after the recovered aqueous ammonia is converted into ammonia gas and steam by heating, the ammonia gas may be reused in the injecting of the ammonia into the acidic gas to adjust the molar ratio of carbon dioxide to ammonia in the entire mixed stream to be o.5 or more.

Another embodiment of the present invention provides an apparatus for removing carbon dioxide in acidic gas including: a gas mixer purifying coke oven gas to mix acidic gas and ammonia with each other; a carbon dioxide collector cooling mixed gas transferred from the gas mixer to form a salt; a reactor preparing the salt formed in the carbon dioxide collector in a form of slurry; a pyrolyzer heating the slurry discharged from the reactor to decompose gas; and an ammonia scrubber performing water-injection on ammonia gas decomposed by the pyrolyzer to recover aqueous ammonia.

Further, a molar ratio of carbon dioxide to ammonia in an entire mixed stream may be adjusted to 0.5 or more by the gas mixer purifying the coke oven gas to mix acidic gas and ammonia, and the ammonia may be a mixed form of ammonia gas and steam.

In the pyrolyzer heating the slurry discharged from the reactor to decompose gas, the salt in the slurry may be heated to decompose into carbon dioxide gas, ammonia gas, and water. Further, the pyrolyzer may heat the slurry to 70 °C or more using high-temperature nitrogen gas and steam.

The mixed gas may be indirectly cooled to 50 °C or less, more specifically, in a temperature range of 20 to 50 °C by the carbon dioxide collector cooling the mixed gas transferred from the gas mixer to form the salt. Further, an ammonium bicarbonate ((NH₄)₂CO₃) salt may be formed by the carbon dioxide collector.

The apparatus may further include, after the ammonia scrubber performing water-injection on ammonia gas decomposed by the pyrolyzer to recover aqueous ammonia, an ammonia solution decomposer heating the recovered aqueous ammonia to convert aqueous ammonia into ammonia gas and steam, wherein the ammonia gas decomposed by the ammonia solution decomposer is reused in the gas mixer purifying the coke oven gas to mix the acidic gas and ammonia.

### [Advantageous Effects]

According to an embodiment of the present invention, carbon dioxide in the acidic gas may be effectively separated by the method for removing carbon dioxide in acidic acid. Further, a load in a gas purification process may be decreased, thereby making it possible to increase process efficiency and economical efficiency of the process. In addition, since the separated carbon dioxide is high-purity gas, the carbon dioxide may be usefully utilized to produce high-value products such as dry ice, ethanol, other compounds, and the like.

### [Description of the Drawings]

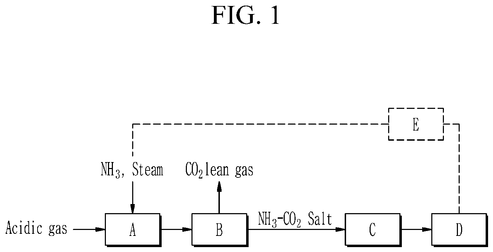

FIG. 1 is a conceptual diagram illustrating a method for selectively removing carbon dioxide gas from acidic gas.
FIG. 2 is a diagram illustrating a process of dissolving ammonium bicarbonate formed according to an exemplary embodiment of the present invention and removing the dissolved ammonium bicarbonate in a form of slurry.
FIG. 3 is a diagram illustrating a result obtained by analyzing an ammonium bicarbonate salt in Example 1 using X-ray diffraction (XRD).

### [Mode for Invention]

Advantages and features of the present invention and methods to achieve them will be elucidated from exemplary embodiments described below in detail with reference to the accompanying drawings. However, the present disclosure is not limited to the exemplary embodiment disclosed herein but will be implemented in various forms. The exemplary embodiments make disclosure of the present disclosure thorough and are provided so that those skilled in the art can easily understand the scope of the present disclosure. Therefore, the present disclosure will be defined by the scope of the appended claims. Like reference numerals throughout the description denote like elements.

Therefore, in order to avoid obscure interpretation of the present invention, a detailed description of technologies well known in the art will be omitted in exemplary embodiments. Unless otherwise defined, all terms (including technical terms and scientific terms) used in the present specification may be used as the general meaning commonly understood by those skilled in the art to which the present invention pertains. Throughout the present specification, unless explicitly described to the contrary, the word "comprise" and variations such as "comprises" or "comprising" will be understood to imply the inclusion of stated elements but not the exclusion of any other elements. Unless explicitly described to the contrary, a singular form includes a plural form in the present specification.

A method for removing carbon dioxide in acidic gas according to an exemplary embodiment of the present invention may include: purifying coke oven gas to prepare acidic gas; injecting ammonia into the acidic gas and adjusting a molar ratio of carbon dioxide to ammonia in an entire mixed stream to 0.5 or more; indirectly cooling the mixed stream to form a salt; removing the salt in a form of slurry; heating the salt in the removed slurry to decompose the salt into carbon dioxide gas, ammonia gas, and water; and recovering the decomposed ammonia gas.

First, the purifying of the coke oven gas to prepare the acidic gas may be performed. In the purifying of the coke oven gas to prepare the acidic gas, hydrogen sulfide gas in the coke oven gas may be purified and the acidic gas generated after purification may be prepared as a raw material.

Thereafter, the injecting of the ammonia into the acidic gas and adjusting the molar ratio of carbon dioxide to ammonia in the entire mixed stream to 0.5 or more may be performed.

More specifically, when the molar ratio of carbon dioxide to ammonia is less than 0.5, ammonia may be injected, and the ammonia may be a mixed form of ammonia gas and steam.

More specifically, ammonia gas is additionally injected in order to efficiently remove carbon dioxide in the acidic gas, and the ammonia gas may be injected depending on a change in concentration of carbon dioxide. More specifically, when the molar ratio of carbon dioxide to ammonia in the steam before injecting ammonia is 0.5 or more, there is no need to inject ammonia.

Then, the indirectly cooling of the mixed stream to form the salt may be performed. In more detail, the salt may include ammonium bicarbonate ((NH₄)₂CO₃), and the mixed stream may be cooled to 50 °C or less by the indirectly cooling of the mixed stream to form the salt. More specifically, the mixed stream may be cooled to 20 to 50 °C. Further, the indirectly cooling of the mixed stream to form the salt may include a reaction represented by the following Chemical Formula 1. In addition, an indirect cooling method for cooling a reactor was used in Example according to the present invention to be described below, but the present invention is not limited thereto.

[Reaction Formula 1] CO₂ + 2NH₃ + H₂O = (NH₄)₂CO₃

In more detail, the case of forming the salt by indirectly cooling the mixed stream to form the salt is efficient as compared to the case of forming a salt by a direct cooling method using cooling water, or the like. In the case of cooling the mixed stream using the direct cooling method, carbon dioxide removal efficiency may be deteriorated due to dissolution of other acidic gases except for carbon dioxide, and a process of treating a formed solution may be accompanied.

Further, the above-mentioned temperature range is a condition for smoothly forming the ammonium bicarbonate salt, and in the case of cooling the mixed stream to the above-mentioned temperature range, the carbon dioxide removal efficiency may be secured.

Next, the removing of the salt in the form of slurry may be performed.

More specifically, since the ammonium bicarbonate ((NH₄)₂CO₃) salt is easily decomposed by water and heat, the salt may be removed in the form of slurry by dissolving the salt using steam.

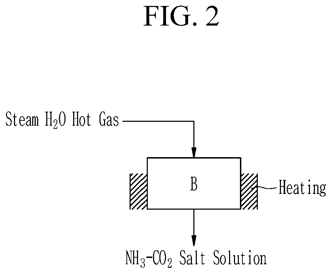

FIG. 2 is a diagram illustrating a process of dissolving ammonium bicarbonate formed according to an exemplary embodiment of the present invention and removing the dissolved ammonium bicarbonate in a form of slurry.

As illustrated in FIG. 2, ammonium bicarbonate present in a carbon dioxide collector may be decomposed by applying heat and water thereto. More specifically, in a method for applying water, the salt may be more easily and rapidly decomposed as compared to a method for applying heat, and it is effect to use steam simultaneously including heat and water.

Thereafter, the heating of the salt in the removed slurry to decompose the salt into carbon dioxide gas, ammonia gas, and water may be performed. More specifically, a temperature of a reactor may be adjusted using high-temperature nitrogen gas and steam, and the salt may be decomposed at 70 °C or more by the heating.

Since there is no slurry that is not decomposed when the salt is heated up to the above-mentioned temperature range, a decrease in efficiency of the reactor and a burden of discharge and treatment of the slurry may be decreased, and the slurry may be completely decomposed in a gas state.

Thereafter, the recovering of the decomposed ammonia gas may be performed.

The ammonia gas among the decomposed gases may be selectively absorbed and separated from carbon dioxide gas by the recovering of the decomposed ammonia gas. More specifically, the ammonia gas may be recovered in a form of aqueous ammonia by the water.

The ammonia gas may be recovered in the form of aqueous ammonia by the water as described above, such that only carbon dioxide gas may be discharged.

The recovered aqueous ammonia is converted into ammonia gas and steam by heating, and then the ammonia gas may be reused in the injecting of the ammonia into the acidic gas to adjust the molar ratio of carbon dioxide to ammonia in the entire mixed stream to be o.5 or more. Therefore, carbon dioxide in the acidic gas may be continuously removed without adding separate ammonia gas.

An apparatus for removing carbon dioxide in acidic gas according to another exemplary embodiment of the present invention may include: a gas mixer purifying coke oven gas to mix acidic gas and ammonia with each other; a carbon dioxide collector cooling mixed gas transferred from the gas mixer to form a salt; a reactor preparing the salt formed in the carbon dioxide collector in a form of slurry; a pyrolyzer heating the slurry discharged from the reactor to decompose gas; and an ammonia scrubber performing water-injection on ammonia gas decomposed by the pyrolyzer to recover aqueous ammonia.

First, in the gas mixer of purifying the coke oven gas to mix acidic gas and ammonia, a molar ratio of carbon dioxide to ammonia in an entire mixed stream may be adjusted to 0.5 or more.

More specifically, when the molar ratio of carbon dioxide to ammonia in the steam before injecting ammonia is 0.5 or more, there is no need to inject ammonia. However, when the molar ratio of carbon dioxide to ammonia in the entire mixed steam is less than 0.5, ammonia may be additionally injected.

In the carbon dioxide collector cooling mixed gas transferred from the gas mixer to form the salt, the salt may be formed by indirectly cooling the mixed gas. The salt may include ammonium bicarbonate ((NH₄)₂CO₃), and the mixed stream may be cooled to 50 °C or less by indirectly cooling the mixed stream. More specifically, the mixed stream may be cooled to 20 to 50 °C.

Further, in the carbon dioxide collector indirectly cooling mixed gas transferred from the gas mixer to form the salt, a reaction represented by the following Chemical Formula 1 may be carried out.

[Reaction Formula 1] CO₂ + 2NH₃ + H₂O = (NH₄)₂CO₃

A method for indirectly cooling the mixed gas and critical significance in a case of cooling the mixed gas to the above-mentioned temperature range are as described above, a detailed description thereof will be omitted.

In the reactor preparing the salt formed in the carbon dioxide collector in the form of slurry, the ammonium bicarbonate ((NH₄)₂CO₃) salt may be prepared in the form of slurry by steam to thereby be discharged.

In the pyrolyzer heating the slurry discharged from the reactor to decompose gas, the salt in the slurry may be heated to decompose into carbon dioxide gas, ammonia gas, and water, and the pyrolyzer may use high-temperature nitrogen gas and steam. Therefore, an internal temperature of the pyrolyzer may be 70 °C or more.

Since there is no slurry that is not decomposed when the salt is heated up to the above-mentioned temperature range, a decrease in efficiency of the reactor and a burden of discharge and treatment of the slurry may be decreased, and the slurry may be completely decomposed in a gas state.

In the ammonia scrubber performing water-injection on ammonia gas decomposed by the pyrolyzer to recover aqueous ammonia, only carbon dioxide gas may be discharged by recovering ammonia gas in the form of aqueous ammonia due to water as described above.

Hereinafter, the present invention will be described through Examples. However, the following Examples are only to exemplify the present invention, and contents of the present invention are not limited by the following Examples.

### Example

**(Table 1)**

| | | Example 1 | Comparative Example 1 | Comparative Example 2 |
|---|---|---|---|---|
| Whether or not ammonia is injected? | | Ammonia is add itionally supplied | Ammonia is not additionally supplied | |
| Cooling method | | Indirect cooling method | Indirect cooling method | Direct cooling method |
| Composition of exhaust gas | | Carbon dioxide (CO₂)< 1 % | Carbon dioxide (CO₂): 52 % | Carbon dioxide (CO₂): 61 % |
| | reaction product | White solid salt | White solid salt + yellow condensate water | Yellow condensate water |
| | Component of Salt | Ammonium bicarbonate (NH₄HCO₃) | Ammonium bicarbonate (NH₄HCO₃) | - |
| | Components of Condensate water | - | Mixture of C, H, N, and S | |

In Example 1 and Comparative Examples 1 and 2, acidic gas generated after purifying hydrogen sulfide (H₂S) in coke oven gas (COG) was prepared as a raw material.

### Example 1

Thereafter, in Example 1, a molar ratio of carbon dioxide to ammonia in an entire mixed stream was adjusted to 0.7 by injecting ammonia into the acidic gas.

The stream into which ammonia was injected was indirectly cooled to 30 °C, thereby forming a salt. Here, the salt formed by the reaction is an ammonium bicarbonate (NH₄HCO₃) salt in a form of a white solid.

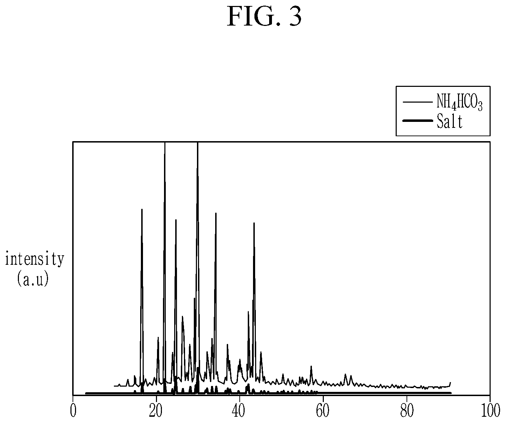

More specifically, FIG. 3 is a diagram illustrating a result obtained by analyzing the ammonium bicarbonate salt in Example 1 using X-ray diffraction (XRD). Therefore, as illustrated in FIG. 3, as an analysis result of X-ray diffraction, it was confirmed the white solid salt in Example 1 was ammonium bicarbonate. More specifically, among peaks illustrated in FIG. 3, a peak value having a low intensity indicates the ammonium bicarbonate (NH₄HCO₃) salt.

Thereafter, the salt was discharged and removed in the form of slurry using steam.

The discharged slurry was heated by injecting high-temperature nitrogen gas and steam, and decomposed into ammonia gas, carbon dioxide gas, and water at 90 °C. Among them, the ammonia gas was recovered in a form of aqueous ammonia due to water, and it was confirmed that a fraction (%) of carbon dioxide gas with respect to 100 % of the entire gas discharged as the exhaust gas was less than 1 %.

In addition, a composition of the exhaust gas was confirmed by performing quantitative analysis using gas chromatography after confirming a trend using a detector tube.

### Comparative Example 1

On the contrary, in Comparative Example 1, acidic gas was indirectly cooled without injecting ammonia into the acidic gas. Here, a product by a cooling reaction was a salt in a form of white solid and yellow condensate water, and a mixture of C, H, N, and S was contained in the condensate water. Thereafter, the same processes as those in Example 1 were performed.

As a result, it was confirmed that a fraction (%) of carbon dioxide gas with respect to 100 % of the entire gas discharged as the exhaust gas was about 52 %.

### Comparative Example 2

In Comparative Example 2, carbon dioxide removal efficiency was evaluated under the same conditions as in Example 1 except that the cooling was performed using a direct cooling method.

As a result, only yellow condensate water was confirmed as a product formed by a cooling reaction, and it was confirmed that a fraction (%) of carbon dioxide gas with respect to 100 % of the entire gas discharged as the exhaust gas was about 61 %.

Therefore, as illustrated in Table 1, since in Comparative Example 1, a concentration of carbon dioxide was not considered at all, additionally injecting ammonia was omitted. As a result, it may be appreciated that carbon dioxide removal efficiency was decreased, and condensate water as well as the ammonium bicarbonate salt was included in the salt formed by the cooling reaction. This may have an influence on the fraction of carbon dioxide discharged as the exhaust gas, and as illustrated in Table 1, it may be appreciated that the fraction of carbon dioxide with respect to 100 % of the entire gas discharged as the exhaust gas was 52 %. Therefore, it may be appreciated that in a case in which a molar ratio of ammonia with respect to the concentration of carbon dioxide was not considered, carbon dioxide removal efficiency may be deteriorated.

Further, in Comparative Example 2, the cooling was performed using the direct cooling method without additionally injecting ammonia. As a result, it may be appreciated that the ammonium bicarbonate salt was not contained at all in a product formed by the cooling reaction, and the fraction of carbon dioxide with respect to 100 % of the entire gas discharged as the exhaust gas was 61 %. Therefore, it may be appreciated that in a case of performing the cooling using the direct cooling method, carbon dioxide removal efficiency may be further deteriorated.

On the contrary, in Example 1 according to the present invention, as a result of forming the salt by indirectly cooling the stream into which ammonia was additionally injected depending on the concentration of carbon dioxide, the ammonium bicarbonate salt was formed in the form of the white solid as a reaction product, such that it was easy to remove and decompose the salt. Further, other acidic gas was hardly dissolved, such that at the time of heating the salt to decompose the salt in a gas phase, it was easy to selectively separate carbon dioxide gas. As a result, a fraction of carbon dioxide discharged as the exhaust gas was less than 1 %, and thus, it may be appreciated that carbon dioxide removal efficiency was significantly high.

Further, in Example 1, the acidic gas generated after purifying hydrogen sulfide was used, but even in the case of using acidic gas including hydrogen sulfide, carbon dioxide gas may be selectively separated.

**(Table 2)**

| | Example 1 | Comparative Example 3 |
|---|---|---|
| Method for heating salt | Injection of high-temperature nitrogen gas and steam | Heating of reactor (heating of external hot coil) |
| Internal temperature of flask | 90° C | 60° C (external temperature: 130° C) |
| Removal time | 4 min | 10 min |
| Reactant after removal | 0 g | 0.31 g |

Table 2 illustrates salt removal efficiency depending on a method for heating a salt to decompose the salt in a gas phase and a temperature. More specifically, in Example 1 according to the present invention, the salt was heated by injecting high-temperature nitrogen gas and steam. Here, a heating temperature was 90 °C.

On the contrary, in Comparative Example 3, a salt was decomposed at 60 °C by directly heating an external hot coil of a reactor in which the salt was prepared in a form of slurry.

As a result, it may be appreciated that in Example 1 in which high-temperature nitrogen gas and steam were injected, even though a removal time was short as compared to Comparative Example 3, the salt removal efficiency also was excellent as illustrated in Table 2.

Therefore, it may be appreciated that in the case of injecting high-temperature gas including steam, the salt was more easily and rapidly decomposed as compared to the case of directly heating the reactor.

Although the exemplary embodiments of the present invention have been described with reference to the accompanying drawings, those skilled in the art to which the present invention pertains will appreciate that various modifications and alterations may be made without departing from the spirit or essential feature of the present invention.

Therefore, it should be understood that the above-mentioned embodiments are not restrictive but are exemplary in all aspects. It should be interpreted that the scope of the present invention is defined by the following claims rather than the above-mentioned detailed description and all modifications or alterations deduced from the meaning, the scope, and equivalences of the claims are included in the scope of the present invention.

### <Description of symbols>

A: gas mixer
B: carbon dioxide (CO₂) collector
C: pyrolyzerD: ammonia (NH₃) scrubber
E: ammonia solution decomposer

## Claims

1. A method for removing carbon dioxide in acidic gas, the method comprising:
purifying coke oven gas to prepare acidic gas;
injecting ammonia into the acidic gas and adjusting a molar ratio of carbon dioxide to ammonia in an entire mixed stream to 0.5 or more;
indirectly cooling the mixed stream to form a salt;
removing the salt in a form of slurry;
heating the salt in the removed slurry to decompose the salt into carbon dioxide gas, ammonia gas, and water; and
recovering the decomposed ammonia gas.

2. The method of claim 1, wherein:
in the injecting of the ammonia into the acidic gas and adjusting the molar ratio of carbon dioxide to ammonia in the entire mixed stream to 0.5 or more,
when the molar ratio of carbon dioxide to ammonia is less than 0.5, ammonia is injected.

3. The method of claim 2, wherein:
in the injecting of the ammonia into the acidic gas and adjusting the molar ratio of carbon dioxide to ammonia in the entire mixed stream to 0.5 or more,
ammonia is injected in a form of a mixed gas of ammonia gas and steam.

4. The method of claim 1, wherein:
in the heating of the salt in the removed slurry to decompose the salt into carbon dioxide gas, ammonia gas, and water,
high-temperature nitrogen gas and steam are used.

5. The method of claim 4, wherein:
the heating of the salt in the removed slurry to decompose the salt into carbon dioxide gas, ammonia gas, and water
is performed at 70 °C or more.

6. The method of claim 1, wherein:
in the indirectly cooling of the mixed stream to form the salt,
the formed salt includes ammonium bicarbonate ((NH₄)₂CO₃).

7. The method of claim 6, wherein:
in the indirectly cooling of the mixed stream to form the salt, a temperature
is 50 °C or less.

8. The method of claim 7, wherein:
in the indirectly cooling of the mixed stream to form the salt, a temperature
is 20 to 50 °C.

9. The method of claim 8, wherein:
the indirectly cooling of the mixed stream to form the salt
includes a reaction represented by the following Chemical Formula 1.
[Reaction Formula 1] CO₂ + 2NH₃ + H₂O = (NH₄)₂CO₃

10. The method of claim 1, wherein:
in the purifying of the coke oven gas to prepare acidic gas;
Hydrogen sulfide gas in the coke oven gas is purified.

11. The method of claim 1, wherein:
in the recovering of the decomposed ammonia gas,
the ammonia gas is recovered in a form of aqueous ammonia by water.

12. The method of claim 11, wherein:
after the recovered aqueous ammonia is converted into ammonia gas and steam by heating,
the ammonia gas is reused in the injecting of the ammonia into the acidic gas and adjusting the molar ratio of carbon dioxide to ammonia in the entire mixed stream to 0.5 or more.

13. An apparatus for removing carbon dioxide in acidic gas, the apparatus comprising:
a gas mixer purifying coke oven gas to mix acidic gas and ammonia with each other;
a carbon dioxide collector cooling mixed gas transferred from the gas mixer to form a salt;
a reactor preparing the salt formed in the carbon dioxide collector in a form of slurry;
a pyrolyzer heating the slurry discharged from the reactor to decompose gas; and
an ammonia scrubber performing water-injection on ammonia gas decomposed by the pyrolyzer to recover aqueous ammonia,
wherein by the gas mixer purifying coke oven gas to mix acidic gas and ammonia with each other,
a molar ratio of carbon dioxide to ammonia in an entire mixed stream is adjusted to 0.5 or more.

14. The apparatus of claim 13, wherein:
in the gas mixer purifying coke oven gas to mix acidic gas and ammonia with each other,
ammonia is in a form of mixed gas of ammonia gas and steam.

15. The apparatus of claim 13, wherein:
in the pyrolyzer heating the slurry discharged from the reactor to decompose gas,
the salt in the slurry is heated to decompose into carbon dioxide gas, ammonia gas, and water, and
the pyrolyzer uses high-temperature nitrogen gas and steam.

16. The apparatus of claim 15, wherein:
by the pyrolyzer heating the slurry discharged from the reactor to decompose gas,
the slurry is heated to 70 °C or more.

17. The apparatus of claim 13, wherein:
by the carbon dioxide collector cooling mixed gas transferred from the gas mixer to form a salt,
the mixed gas is indirectly cooled to 50 °C or less.

18. The apparatus of claim 17, wherein:
by the carbon dioxide collector cooling mixed gas transferred from the gas mixer to form a salt,
the mixed gas is indirectly cooled in a temperature range of 20 to 50 °C or less.

19. The apparatus of claim 18, wherein:
by the carbon dioxide collector cooling mixed gas transferred from the gas mixer to form a salt,
an ammonium bicarbonate ((NH₄)₂CO₃) salt is formed.

20. The apparatus of claim 13, further comprising:
after the ammonia scrubber performing water-injection on ammonia gas decomposed by the pyrolyzer to recover aqueous ammonia,
an ammonia solution decomposer heating the recovered aqueous ammonia to convert aqueous ammonia into ammonia gas and steam,
wherein the ammonia gas decomposed by the ammonia solution decomposer is reused in the gas mixer purifying the coke oven gas to mix the acidic gas and ammonia.
